Europäisches Patentamt

European Patent Office

Office européen des brevets

(19)

(11) Publication number : **0 328 173 B1**

# (12) EUROPEAN PATENT SPECIFICATION

(45) Date of publication of patent specification :
**11.03.92 Bulletin 92/11**

(51) Int. Cl.[5] : **H04N 1/40**

(21) Application number : **89200125.6**

(22) Date of filing : **20.01.89**

(54) **Method for producing and applying onto a carrier a two-dimensional image of a given original, said image being built up by frequency modulation.**

(30) Priority : **12.02.88 NL 8800352**

(43) Date of publication of application :
**16.08.89 Bulletin 89/33**

(45) Publication of the grant of the patent :
**11.03.92 Bulletin 92/11**

(84) Designated Contracting States :
**AT BE CH DE ES FR GB GR IT LI LU NL SE**

(56) References cited :
**US-A- 3 580 995**

(56) References cited :
**JOURNAL OF THE OPTICAL SOCIETY OF AMERICA, vol. 4, no. 10, October 1987, pages 1873-1878, Optical Society of America, New York, US; R. ESCHBACH et al.: "Binarization using a two-dimensional pulse-density modulation"**
**IEEE SPECTRUM, vol. 5, no. 10, October 1968, pages 64-72, New York, US; R.L. HALLOWS et al.: "Electronic halftones"**

(73) Proprietor : **Joh. Enschedé en Zonen Grafische Inrichting B.V.**
**P.O. Box 114 Klokhuisplein 5**
**NL-2000 AC Haarlem (NL)**

(72) Inventor : **Spannenburg, Sybrand**
**Singel 40**
**NL-1755 NT Petten (NL)**

(74) Representative : **Kooy, Leendert Willem et al**
**OCTROOIBUREAU VRIESENDORP & GAADE**
**P.O. Box 266**
**NL-2501 AW The Hague (NL)**

EP 0 328 173 B1

## Description

The present invention relates to a method for producing and applying onto a carrier a two-dimensional image of a given original, said image being built up by frequency modulation.

Such a method is known from the article "Binarization using a two-dimensional pulse-density modulation" by R. Eschbach and R. Hauck in "Journal of the Optical Society of America A", pages 1873-1878, October 1987. In this article, on the basis of the gray-level value, the size of a surface area within the total surface of the image is repeatedly determined in a number of points in the original, in which area one image point is applied. By thus filling the total surface with image points (pulses) a pulse density modulated image of the original is constructed.

The present invention aims to provide a different method of a frequency modulated image construction and for that purpose is characterized by choosing a first starting line, either situated within the original or touching the same, and the repeated application of: defining first points on the starting line, determining trajectories that are orthogonal with respect to the starting line for at least a number of the first points on the starting line, determining a second point within an area situated along one chosen side of the starting line on each orthogonal trajectory, the distance of each second point to the first point on the same orthogonal trajectory being a function f of a halftone value assigned to the first point, and constructing a line through the second points, which line also functions as the origin of a next starting line.

The image on the carrier obtained in the above-described manner thus shows an image composed by means of starting lines in which the distance between the starting lines has been modulated in accordance with the assigned halftone values. On account of the frequency-modulated image composition the method can advantageously be applied for securing such images against counterfeiting by means of rasters or digital systems, e.g. when the carrier is a security paper, for the forgery will contain a distortion in the reproduction due to an interference phenomenon, the so-called Moiré effect caused by the interference of certain starting line frequencies occurring in the image with the raster frequency and the presence in the image of frequencies that are larger than twice the sampling frequency, respectively.

On the basis of the enclosed figures a preferred embodiment of the method according to the invention will be further elucidated.

Fig 1 shows a flow diagram of the method according to the preferred embodiment,

fig. 2 shows a matrix-orientated reproduction of an original,

fig. 3 shows the frequency-modulated image of the original of fig. 2 with broken starting lines,

fig. 4 shows a frequency-modulated image with drawn starting lines.

In order to obtain a certain amount of rotation symmetry in the image, a closed curve $\Gamma$ that does not intersect itself is preferably chosen for the first starting line. Moreover, this curve encloses the original to be reproduced. The enclosed area formes the inner area and the area beyond that forms the outer area. The starting lines that are to be applied can be optionally produced drawn or broken.

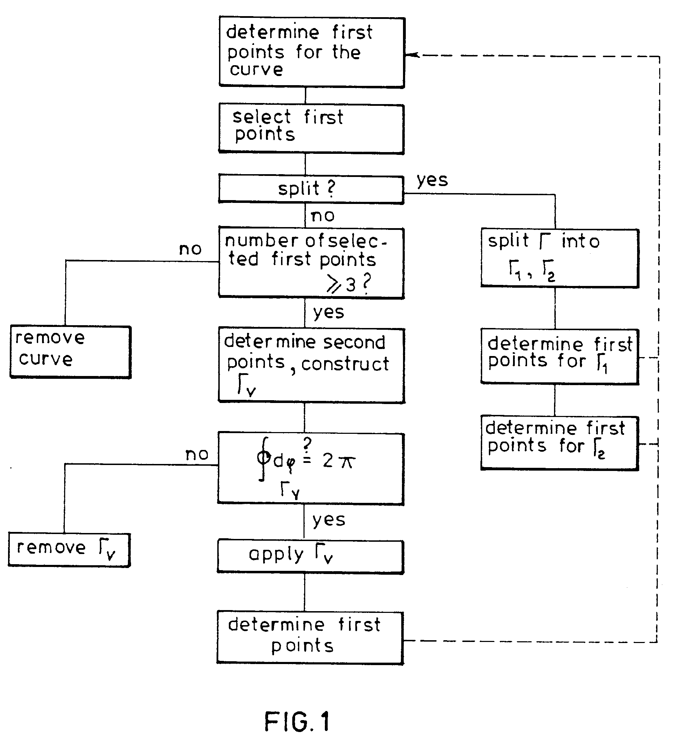

Following fig. 1, firstly the first points on the curve $\Gamma$ are determined. The location of the second points, for which in this case obviously the inner area will be chosen, is determined by the function:

$$f(x_i, y_i) = \min[(d_{max}, d(x_i, y_i)]$$

$x_i, y_i$ being the coordinates of the i-th first point, and the value of the function $d(x_i, y_i)$ being dependent on the halftone value $\rho$ in $(x_i, y_i)$. In order to prevent measured, adjacent, orthogonal trajectories from intersecting one another, for the determination of the second points only those first points will be used of which it can be said that, starting from a first point i, the distance to an adjacent point i+1 is larger than $d(x_i, y_i) + d(x_{i+1}, y_{i+1})$. Of course other criteria are also conceivable. If $d(x_i, y_i)$ exceeds a predetermined value $d_{max}$, which corresponds to a very light halftone in the original in $(x_i, y_i)$, then f assumes a maximum value $d_{max}$. For $d(x_i, y_i)$ one can e.g. choose:

$$d(x_i, y_i) = \frac{\alpha\rho(x_i, y_i)}{1 + \varepsilon^{-\rho(x_i, y_i)}} + d_{mp}.$$

in which $\alpha$ and $\varepsilon$ are constants and $d_{mp}$ is the minimal width of the applied starting line.

Before constructing the next starting line $\Gamma v$, it is first checked whether all second points will be within the inner area of the curve $\Gamma$. If such is not the case, than $\Gamma$ is split into two curves $\Gamma 1$, $\Gamma 2$ and the procedure is started again for each of the curves separately. Furthermore, as it is required that for calculating an orthogonal trajectory at least three first points are present on the starting line, the number of points is tested, and dependent on the outcome the next curve is either constructed or removed. If a thus constructed curve $\Gamma v$ does not meet:

$$\oint_{\Gamma v} d\phi = 2\pi$$

in which $\phi$ is the angle between the unit vector tangent to $\Gamma v$ and the x-axis, this implies that the curve intersects itself, and this curve is removed as yet. However, if this requirement is met, $\Gamma v$ is applied onto the carrier.

Due to the recursive action indicated by means of the dotted lines, thus the entire original is scanned, the above testing of the number of points and the contour integral criterion serving as stop criteria for the method.

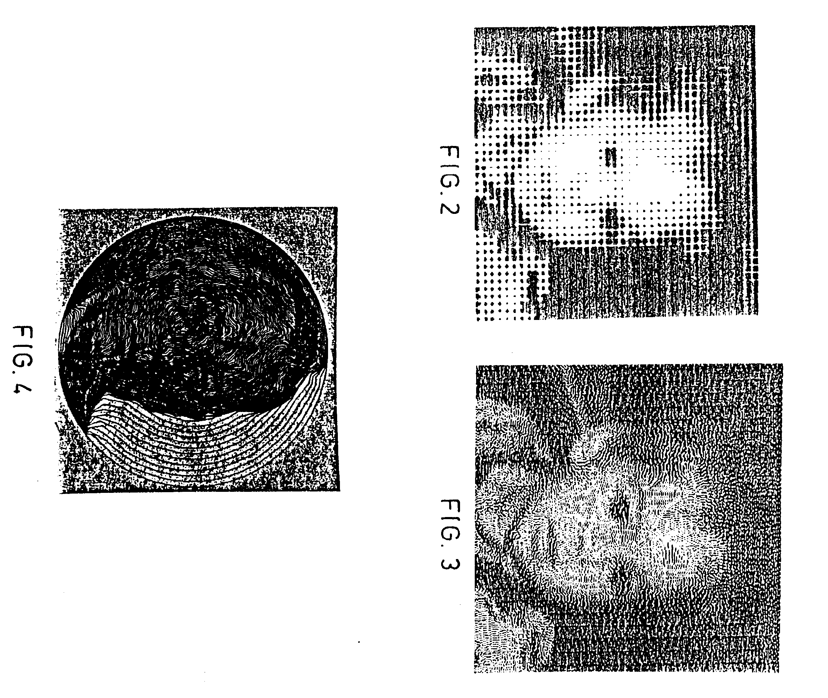

As an example, figure 2 shows an example of an original on a binary display unit. The image is matrix-orientated, i.e. that the distance between adjacent image points is constant, and composed in this case of 40 x 40 image elements of 9 x 9 minimal points (pixels). Fig. 3 shows the corresponding frequency modulated image on the same binary display unit. Because of the limited resolution of the reproduction unit, in this case broken starting lines with separate image points have been chosen. The mutual distance between adjacent image point can be easily determined by the above-stated function f starting from a first point. Applying broken starting lines may also be desirable if with certain printing techniques, such as plate printing, drawn lines would be swept off at the desired resolution. It appears from figures 2 and 3 that by applying frequency-modulation increased image quality has been obtained. Since the original, read in in a matrix-orientated manner, is converted by the above-described method into a vector-orientated image, it is also possible to reproduce the image on a vector-orientated system, e.g. a plotter. This has been illustrated in fig. 4. This figure shows, four times reduced, an image with drawn starting lines obtained by means of an A3 plotter. By choosing the smallest possible pen size, $d_{mp}$, the resolution is even further increased. Because of that, the use of an objective that is out of focus for the purpose of somewhat repressing the Moiré effects in counterfeiting will cause detailed image fragments to disappear.

## Claims

1. Method for producing and applying onto a carrier a two-dimensional image of a given original, said image being built up by frequency modulation, **characterized by** choosing a first starting line, either situated within the original or touching the same, and the repeated application of: defining first points on the starting line, determining trajectories that are orthogonal with respect to the starting line for at least a number of the first points on the starting line, determining a second point within an area situated along one chosen side of the starting line on each orthogonal trajectory, the distance of each second point to the first point on the same orthogonal trajectory being a function f of a halftone value assigned to the first point, and constructing a line through the second points, which line also functions as the origin of a next starting line.

2. Method according to claim 1, **characterized in that** f meets the following function regulation:
$$f(x_i, y_i) = min [d_{max}, d(x_i, y_i)].$$

3. Method according to claim 2, **characterized in**

**that** $d(x_i, y_i)$ meets:
$$d(x_i, y_i) = \frac{\alpha \rho(x_i, y_i)}{1 + \varepsilon - \rho(x_i, y_i)} + d_{mp}.$$

4. Method according to one of claims 1 through 3, **characterrized in that** a closed contour which does not intersect itself and which encloses the original is chosen as first starting line.

5. Method according to claim 4, **characterized in that** second point on each orthogonal trajectory is determined within the interior area of the closed contour.

6. Method according to one of claims 1 through 5, **characterized in that** the starting lines are applied broken onto the carrier.

7. Method according to claim 6, **characterized in that** the starting lines which have been applied broken, are composed of separate image points, the mutual distance between each two adjacent image points being determined dependent on the half tone value in one of the two points.

8. Method according to claim 7, **characterized in that** the mutual distance between each two adjacent image points is determined by the function f.

9. Method according to one of claims 1 through 8, **characterized in that** the starting lines are applied onto the carrier by plate printing.

10. Method according to any of the preceding claims, **characterised in that** the carrier is a security paper.

## Patentansprüche

1. Verfahren zum Herstellen und auf einen Träger Aufbringen eines aus Frequenzmodulation von einem bestimmten Urbild ab aufgebauten Zweidimensionsbilds, gekennzeichnet durch das Wählen einer ersten Startlinie, die entweder innerhalb dem Urbild liegt oder dieses berührt, und die wiederholte Anwendung: der Definition erster Punkte auf die Startlinie, der Bestimmung in bezug auf die Startlinie orthogonaler Trajektorien für wenigstens eine Anzahl der ersten Punkte auf die Startlinie, der Bestimmung eines zweiten Punkts innerhalb einem an eine gewählte Seite der Startlinie gelegenen Gebiet auf jede orthogonale Trajektorie, wobei der Abstand jedes zweiten Punktes zu dem ersten Punkt auf die selbe orthogonale Trajektorie eine dem ersten Punkt zuerkannte Funktion f eines Halbtonwerts ist, und der Konstruktion einer Linie durch die zweiten Punkte, welche Linie auch als der Ursprung einer folgenden Startlinie funktioniert.

2. Verfahren nach Anspruch 1, dadurch gekennzeichnet dass f der folgenden Funktionvorschrift entspricht:
$$f(x_i, y_i) = min [d_{max}, d(x_i, y_i)].$$

3. Verfahren nach Anspruch 2, dadurch gekennzeichnet, dass $d(x_i, y_i)$ :

$$d(x_i, y_i) = \frac{\alpha\rho(x_1, y_i)}{1 + \varepsilon - \rho(x_1, y_i)} + d_{mp}$$

entspricht.

4. Verfahren nach einem der Ansprüche 1 - 3, dadurch gekennzeichnet, dass als erste Startlinie eine das Urbild umfassende, sich selbst nicht durchstossende, geschlossene Kontur gewählt wird.

5. Verfahren nach Anspruch 4, dadurch gekennzeichten, dass der zweite Punkt auf jede orthogonale Trajektorie innerhalb dem Innengebiet der geschlossenen Kontur bestimmt wird.

6. Verfahren nach einem der Ansprüche 1 - 5, dadurch gekennzeichnet, dass die Startlinien unterbrochen auf den Träger aufgebracht werden.

7. Verfahren nach Anspruch 6, dadurch gekennzeichnet, dass die unterbrochen aufgebrachten Startlinien aus gesonderten Bildpunkten bestehen, wobei der gegenseitige Abstand zwischen jedesmal zwei naheliegenden Bildpunkten abhängig von dem Halbtonwert in einem der zwei Punkte bestimmt wird.

8. Verfahren nach Anspruch 7, dadurch gekennzeichnet, dass der gegenseitige Abstand zwischen jedesmal zwei naheliegenden Bildpunkten von der Funktion f bestimmt wird.

9. Verfahren nach einem der vohergehenden Ansprüche 1 - 8, dadurch gekennzeichnet, dass die Startlinien durch Kupferdruck auf den Träger aufgebracht werden.

10. Verfahren nach einem der vorhergehenden Ansprüche, dadurch gekennzeichnet, dass der Träger ein Sicherheitspapier ist.

## Revendications

1. Procédé pour la production et pour l'application sur un support d'une image à deux dimensions composées par modulation de fréquence d'un original donné, caractérisé en ce qu'il consiste à choisir une première ligne de départ, située soit dans l'original, soit en contact avec lui, et à répéter l'exécution des opérations suivantes : définition de premiers points sur la ligne de départ, détermination de trajectoires qui sont perpendiculaires à la ligne de départ au moins pour un certain nombre des premiers points de la ligne de départ, détermination d'un second point dans une zone située le long d'un côté choisi de la ligne de départ sur chaque trajectoire perpendiculaire, la distance entre chaque second point et chaque premier point de la même trajectoire perpendiculaire étant une fonction f d'une valeur de demi-teinte affectée à ce premier point, et construction d'une ligne passant par les seconds points, laquelle ligne fonctionne également comme origine d'une ligne de départ suivante.

2. Procédé selon la revendication 1, caractérisé en ce que f correspond à la fonction suivante :

$$f(x_i, y_i) = \min [d_{max}, d(x_i, y_i)].$$

3. Procédé selon la revendication 2, caractérisé en ce que $d(x_i, y_i)$ est défini par :

$$d(x_i, y_i) = \frac{\alpha\rho(x_i, y_i)}{1 + \varepsilon - \rho(x_i, y_i)} + d_{mp}.$$

4. Procédé selon l'une des revendications 1 à 3, caractérisé en ce qu'un contour fermé qui ne présente pas de point d'intersection et qui entoure l'original est choisi comme première ligne de départ.

5. Procédé selon la revendication 4, caractérisé en ce que le second point sur chaque trajectoire perpendiculaire est défini dans la surface intérieure du contour fermé.

6. Procédé selon l'une des revendications 1 à 5, caractérisé en ce que les lignes de départ sont appliquées sous forme interrompue sur le support.

7. Procédé selon la revendication 6, caractérisé en ce que les lignes de départ qui sont appliquées sous forme interrompue, sont constituées de points-image séparés, la distance mutuelle entre chaque deux points-image adjacents étant définie en fonction de la valeur de la demi-teinte en l'un des deux points.

8. Procédé selon la revendication 7, caractérisé en ce que la distance mutuelle entre chaque deux points-image adjacents est déterminée par la fonction f.

9. Procédé selon l'une des revendications 1 à 8, caractérisé en ce que les lignes de départ sont appliquées sur le support par impression à plat.

10. Procédé selon l'une quelconque des revendications précédentes, caractérisé en ce que le support est un papier de sécurité.

FIG.1

FIG. 2

FIG. 3

FIG. 4